# EUROPÄISCHE PATENTSCHRIFT

(11) **EP 3 931 468 B1**
(45) Veröffentlichungstag und Bekanntmachung des Hinweises auf die Patenterteilung: **02.07.2025**
(21) Anmeldenummer: 20706662.2
(22) Anmeldetag: 17.02.2020
(51) Int. Cl.: F16H 57/08

(54) **PLANETENTRÄGER EINES PLANETENGETRIEBES SOWIE PLANETENGETRIEBE MIT EINEM SOLCHEN PLANETENTRÄGER**
PLANET CARRIER OF A PLANETARY GEARBOX AND PLANETARY GEARBOX HAVING A PLANET CARRIER OF THIS KIND
PORTE-SATELLITES D'UNE BOÎTE DE VITESSES À TRAINS ÉPICYCLOÏDAUX ET BOÎTE DE VITESSES À TRAINS ÉPICYCLOÏDAUX COMPORTANT UN TEL PORTE-SATELLITES

(30) Priorität: 26.02.2019 DE 102019104898
(43) Veröffentlichungstag der Anmeldung: 05.01.2022
(73) Patentinhaber: IMS Gear SE & Co. KGaA, 78166 Donaueschingen (DE)
(72) Erfinder: FUCHS, Gabriel, 78479 Reichenau (DE); KIENINGER, Matthias, 78050 Villingen-Schwenningen (DE)
(74) Vertreter: Westphal, Mussgnug & Partner Patentanwälte mbB
(86) Internationale Anmeldenummer: PCT/EP2020/054079
(87) Internationale Veröffentlichungsnummer: WO 2020/173737

(56) Entgegenhaltungen:
- DE-A1- 102009 026 751
- DE-A1- 102014 203 587
- DE-A1- 4 411 604
- US-A- 1 276 855
- US-A- 5 928 105
- US-A1- 2015 354 672

## Beschreibung

Die vorliegende Erfindung betrifft einen Planetenträger eines Planetengetriebes. Weiterhin betrifft die Erfindung ein Planetengetriebe mit einem solchen Planetenträger.

Planetengetriebe werden in vielen Anwendungen eingesetzt, bei denen ein hohes Untersetzungs- oder Übersetzungsverhältnis bei geringem Bauraum realisiert werden muss. Planetengetriebe zeichnen sich insbesondere dadurch aus, dass sie einen Planetenträger aufweisen, an welchem mindestens ein Planetenrad, üblicherweise aber drei oder vier Planetenräder gelagert sind. Die Planetenräder kämmen radial innen mit einem Sonnenrad, während sie radial außen mit einem Hohlrad kämmen. Während der Planetenträger und das Sonnenrad typischerweise um eine Planetenträger-Drehachse drehbar sind, sind die Planetenräder jeweils um eine Planetenrad-Drehachse drehbar im Planetenträger gelagert.

Je nach Ausgestaltung des Planetenträgers weist dieser zwei voneinander beabstandet angeordnete Trägerabschnitte auf, in denen pro Planetenrad eine erste Lagerungsbohrung und eine zweite Lagerungsbohrung angeordnet sind. Die Lagerungsbohrungen weisen einen geschlossenen Umfang auf. Zwischen den beiden Trägerabschnitten ist ein Aufnahmehohlraum angeordnet, in welchem das Planetenrad angeordnet werden kann. Das Planetenrad umfasst in vielen Fällen eine Planetenradachse, welche durch das Planetenrad durchgesteckt ist und beidseitig über das Planetenrad übersteht. Die überstehenden Abschnitte der Planetenradachse greifen in die beiden Lagerungsbohrungen ein. Derartige Planetenträger sind aus der DE 44 11 604 A1, der EP 3 486 523 A1, der US 2015/0330467 A1, der DE 10 2009 026 751 A1, der DE 10 2014 203 587 A1, der US 2015/354672 A1, der US 5 928 105 A und der US 6 031 308 A bekannt.

Nachteilig hieran ist, dass zur Montage des Planetengetriebes das Planetenrad fluchtend zur ersten Lagerungsbohrung und zweiten Lagerungsbohrung ausgerichtet werden muss, bevor die Planetenradachse durch die erste Lagerungsbohrung, das Planetenrad und die zweite Lagerungsbohrung durchgesteckt werden kann, wobei die Planetenradachse parallel zur Planententräger-Drehachse bewegt wird. Die Fertigung des Planetengetriebes gestaltet sich entsprechend schwierig. Zudem ist es nicht möglich, die Planetenradachse integral mit dem Planetenrad auszuführen.

Aufgabe einer Ausführungsform der vorliegenden Erfindung ist es, einen Planetenträger für ein Planetengetriebe vorzuschlagen, der auf einfache Weise zu fertigen ist und dennoch einen guten Eingriff der Zahnräder des Planetengetriebes bereitstellt. Des Weiteren liegt einer Ausgestaltung der vorliegenden Erfindung die Aufgabe zugrunde, ein Planetengetriebe zu schaffen, welches mit einem derartigen Planetenträger betrieben werden kann.

Diese Aufgabe wird mit den in den Ansprüchen 1, und 5 angegebenen Merkmalen gelöst. Vorteilhafte Ausführungsformen sind Gegenstand der Unteransprüche.

Eine Ausführungsform der Erfindung betrifft einen Planetenträger eines Planetengetriebes, umfassend
- einen Trägerkörper, der sich entlang einer Planetenträger-Drehachse erstreckt,
- einen mit dem Trägerkörper verbundenen ersten Trägerabschnitt, und
- einen mit dem Trägerkörper verbundenen zweiten Trägerabschnitt, wobei
- der erste Trägerabschnitt und der zweite Trägerabschnitt entlang der Planetenträger-Drehachse beabstandet zueinander angeordnet sind und zumindest einen Aufnahmehohlraum bilden, in welchen mindestens ein Planetenrad einbringbar ist,
- das zumindest eine Planetenrad einen ersten Lagerungsabschnitt und einen zweiten Lagerungsabschnitt aufweist, mit welchen das Planetenrad um eine Planetenrad-Drehachse drehbar im Planetenträger lagerbar ist,
- der erste Trägerabschnitt je Planetenrad eine erste Lagerungsausnehmung und der zweite Trägerabschnitt je Planetenrad eine zweite Lagerungsausnehmung aufweist, und
- die erste Lagerungsausnehmung eine erste Kontaktfläche bildet, mit welcher dieselbe mit dem ersten Lagerungsabschnitt in Kontakt tritt, wenn das Planetenrad im Aufnahmehohlraum angeordnet ist,
- die zweite Lagerungsausnehmung eine zweite Kontaktfläche bildet, mit dem dieselbe mit dem zweiten Lagerungsabschnitt in Kontakt tritt, wenn das Planetenrad im Aufnahmehohlraum angeordnet ist,
- die erste Kontaktfläche und/oder die zweite Kontaktfläche von einer durch die Planetenträger-Drehachse und die Planetenrad-Drehachse verlaufende Verbindungsgeraden in einen ersten Kontaktflächenabschnitt und einen zweiten Kontaktflächenabschnitt unterteilt werden,
- der erste Kontaktflächenabschnitt einen ersten Winkel mit der Verbindungsgeraden einschließt,
- der zweite Kontaktflächenabschnitt einen zweiten Winkel mit der Verbindungsgeraden einschließt,
- der erste Winkel und der zweite Winkel in einer Ebene liegen, die senkrecht zur Planetenrad-Drehachse verläuft, und
- der erste Winkel und der zweite Winkel ungleich sind und zumindest einer der Winkel größer als 90° ist.

Aufgrund der Tatsache, dass anstelle von Lagerungsbohrungen vorschlagsgemäß Lagerungsausnehmungen verwendet werden, ist es möglich, die Planetenradachse mittels einer auf die Planetenträger-Drehachse hin gerichteten radialen Bewegung in die Lagerungsausnehmungen einzubringen. Hieraus ergibt sich die Möglichkeit, das betreffende Planetenrad insoweit vorzumontieren, dass die Planetenradachse bereits durch das Planetenrad durchgesteckt werden kann, bevor die Planetenradachse in die Lagerungsausnehmungen eingebracht wird. Insbesondere entfällt die Notwendigkeit, dass Planetenrad fluchtend zur Lagerungsbohrung ausrichten zu müssen. Hierdurch lässt sich die Fertigung des Planetengetriebes deutlich vereinfachen. Aufgrund der Tatsache, dass zumindest einer der Winkel größer als 90° ist, wird gleichzeitig die Kontaktfläche so weit vergrößert, dass eine Auswanderung der Planetenradachse radial nach außen verhindert wird. Hierdurch wird ein günstiger Eingriff der Zahnräder des Planetengetriebes gewährleistet. Dadurch, dass der erste Winkel und der zweite Winkel unterschiedlich sind, sind die Lagerungsausnehmungen für sich betrachtet asymmetrisch ausgestaltet. Hierdurch lässt sich zumindest ein Kontaktflächenabschnitt so gestalten, dass er sich radial nach außen weit um die Planetenradachse erstreckt. Die bereits erwähnte radiale Auswanderung der Planetenräder lässt sich hiermit besonders effektiv verhindern.

Gemäß einer weiteren Ausführungsform sind der erste Winkel und der zweite Winkel der ersten Lagerungsausnehmung in Bezug auf die Planetenträger-Drehachse gegensinnig zum ersten Winkel und zum zweiten Winkel der zweiten Lagerungsausnehmung angeordnet. Je nach Drehrichtung des Planetengetriebes kann eine richtungsabhängige seitliche Kraftkomponente entstehen. Aufgrund der gegensinnigen Ausrichtung kann eine Auswanderung der Planetenräder unabhängig von der Drehrichtung verhindert werden.

Eine nicht zur vorliegenden Erfindung gehörige Ausbildung betrifft einen Planetenträger eines Planetengetriebes, umfassend
- einen Trägerkörper, der sich entlang einer Planetenträger-Drehachse erstreckt,
- einen mit dem Trägerkörper verbundenen ersten Trägerabschnitt, und
- einen mit dem Trägerkörper verbundenen zweiten Trägerabschnitt, wobei
- der erste Trägerabschnitt und der zweite Trägerabschnitt entlang der Planetenträger-Drehachse beabstandet zueinander angeordnet sind und zumindest einen Aufnahmehohlraum bilden, in welchen mindestens ein Planetenrad einbringbar ist,
- das zumindest eine Planetenrad einen ersten Lagerungsabschnitt und einen zweiten Lagerungsabschnitt aufweist, mit welchen das Planetenrad um eine Planetenrad-Drehachse drehbar im Planetenträger lagerbar ist,
- der erste Trägerabschnitt je Planetenrad eine erste Lagerungsausnehmung und der zweite Trägerabschnitt je Planetenrad eine zweite Lagerungsausnehmung aufweist, und
- die erste Lagerungsausnehmung eine erste Kontaktfläche bildet, mit welcher dieselbe mit dem ersten Lagerungsabschnitt in Kontakt tritt, wenn das Planetenrad im Aufnahmehohlraum angeordnet ist,
- die zweite Lagerungsausnehmung eine zweite Kontaktfläche bildet, mit dem dieselbe mit dem zweiten Lagerungsabschnitt in Kontakt tritt, wenn das Planetenrad im Aufnahmehohlraum angeordnet ist,
- die erste Kontaktfläche und/oder die zweite Kontaktfläche von einer durch die Planetenträger-Drehachse und die Planetenrad-Drehachse verlaufende Verbindungsgeraden in einen ersten Kontaktflächenabschnitt und einen zweiten Kontaktflächenabschnitt unterteilt werden,
- der erste Kontaktflächenabschnitt einen ersten Winkel mit der Verbindungsgeraden einschließt,
- der zweite Kontaktflächenabschnitt einen zweiten Winkel mit der Verbindungsgeraden einschließt,
- der erste Winkel und der zweite Winkel in einer Ebene liegen, die senkrecht zur Planetenträger-Drehachse und zur Planetenrad-Drehachse verlaufen, und
- der erste Winkel und der zweite Winkel gleich und größer als 90° sind.

Aufgrund der Tatsache, dass anstelle von Lagerungsbohrungen vorschlagsgemäß Lagerungsausnehmungen verwendet werden, ist es möglich, die Planetenradachse mittels auf die Planetenträger-Drehachse hin gerichteten radialen Bewegung in die Lagerungsausnehmungen einzubringen. Hieraus ergibt sich die Möglichkeit, das betreffende Planetenrad insoweit vorzumontieren, als dass die Planetenradachse bereits durch das Planetenrad durchgesteckt werden kann, bevor die Planetenradachse in die Lagerungsausnehmungen eingebracht wird. Insbesondere entfällt die Notwendigkeit, dass Planetenrad fluchtend zur Lagerungsbohrung ausrichten zu müssen. Hierdurch lässt sich die Fertigung des Planetengetriebes deutlich vereinfachen.

Aufgrund der Tatsache, dass beide Winkel größer als 90° sind, wird gleichzeitig die Kontaktfläche so weit vergrößert, dass eine Auswanderung der Planetenräder radial nach außen verhindert wird. Hierdurch wird ein günstiger Eingriff der Zahnräder des Planetengetriebes gewährleistet.

Nach Maßgabe einer weiteren Ausführungsform oder weiteren Ausbildung besteht der Planetenträger aus einem spritzgussfähigen Kunststoff und ist spritzgegossen. Die Verwendung von Spritzguss ermöglicht es, eine hohe Anzahl von Planetenträgern zu geringen Stückkosten bereitzustellen. Zudem lässt sich das Gewicht des Planetenträgers mit der Verwendung von Kunststoff gering halten. Aufgrund der Tatsache, dass sich Kunststoff bei einer gegebenen Belastung und bei einer vergleichbaren Dimensionierung des Planetenträgers stärker verformt als Stahl, treten die oben genannten Vorteile der asymmetrischen Gestaltung der Lagerungsausnehmungen bei Planetenträgern aus Kunststoff besonders deutlich zu Tage.

In einer weitergebildeten Ausführungsform oder weitergebildeten Ausbildung ist der Planetenträger einteilig ausgestaltet. Aufgrund der einteiligen Ausbildung des Planetenträgers wird die Fertigung vereinfacht, da ein Fügeschritt zum Verbinden von zwei oder mehreren Teilen des Planetenträgers entfallen kann. Zudem wird die Lagerhaltung vereinfacht, da nur der Planetenträger als solches vorgehalten werden und nicht dafür Sorge getragen werden muss, dass mehrere Teile verfügbar sind.

Eine Ausführung der Erfindung betrifft ein Planetengetriebe, umfassend
- einen Planetenträger nach einem der vorherigen Ausführungsformen oder Ausbildungen, und
- zumindest ein Planetenrad, welches um eine Planetenrad-Drehachse drehbar am Planetenträger gelagert ist.

Die technischen Effekte und Vorteile, die sich mit dem vorschlagsgemäßen Planetengetriebe erreichen lassen, entsprechen denjenigen, die für den Planetenträger erörtert worden sind. Zusammenfassend sei darauf hingewiesen, dass sich die Fertigung des Planetengetriebes insbesondere dadurch vereinfachen lässt, dass die Planetenräder und die Planetenradachsen vormontiert und mittels einer auf die Planetenträger-Drehachse gerichteten radialen Bewegung montiert werden können.

Gemäß einer weiteren Ausführung weist das Planetenrad eine schrägverzahnte Planetenrad-Verzahnung auf. Bei schrägverzahnten Planetengetrieben treten besondere Belastungen auf. Während bei einer am geradverzahnten Planetengetriebe so gut wie keine Kräfte entlang der Planetenträger-Drehachse wirken, überlagern sich bei schrägverzahnten Planetengetrieben axial und radial wirkende Kräfte. Insbesondere dann, wenn der Planetenträger oder das gesamte Planetengetriebe aus Kunststoff bestehen, bewirken die radial und axial gerichteten Kräfte eine erhöhte Verformung insbesondere des Planetenträgers, weshalb es zu einem radialen Auswandern der Planetenräder kommen kann. Hierdurch wird der optimale Eingriff der Zahnräder des Planetengetriebes gestört. Aufgrund der vorschlagsgemäßen Ausgestaltung der Lagerungsausnehmungen des Planetenträgers wird eine radiale Auswanderung der Planetenräder verhindert oder zumindest so weit verringert, dass der Eingriff der Zahnräder des Planetengetriebes nicht negativ beeinflusst wird.

Nach Maßgabe einer fortentwickelten Ausführung verläuft die Planetenrad-Drehachse windschief zur Planetenträger-Drehachse. In dieser Ausgestaltung ist das Planetengetriebe als ein Schraubrad-Planetengetriebe ausgestaltet. Schraubrad-Planetengetriebe ermöglichen es, noch höhere Übersetzung- oder Untersetzungsverhältnisse auf gleichem Bauraum im Vergleich zu geradverzahnten oder schrägverzahnten Planetengetrieben bereitzustellen.

Eine weitere Ausführung zeichnet sich dadurch aus, dass der erste Lagerungsabschnitt und der zweite Lagerungsabschnitt integral mit dem Planetenrad ausgebildet sind. Bei bekannten Planetenrädern werden die Lagerungsabschnitte von einer Planetenradachse gebildet, welche durch das Planetenrad durchgesteckt wird. Die Planetenradachse bildet daher ein zusätzliches Bauteil, welches in dieser Ausführung eingespart werden kann, wodurch die Montage und die Lagerhaltung vereinfacht werden können.

Beispielhafte Ausführungsformen der Erfindung werden im Folgenden unter Bezugnahme auf die beigefügten Zeichnungen näher erläutert. Es zeigen
- Figur 1A: einen Planetenträger nach dem Stand der Technik in einer perspektivischen Darstellung,
- Figur 1B: den in Figur 1A gezeigten Planetenträger anhand einer Vorderansicht,
- Figur 1C: ein Planetenrad, welches am Planetenträger nach den Figuren 1A und 1B drehbar gelagert werden kann,
- Figur 2A: ein erstes Ausführungsbeispiel eines nicht erfindungsgemäßen Planetenträgers anhand einer perspektivischen Darstellung,
- Figur 2B: das in Figur 2B gezeigte erste Ausführungsbeispiel des Planetenträgers anhand einer Vorderansicht,
- Figur 3A: ein zweites Ausführungsbeispiel eines erfindungsgemäßen Planetenträgers anhand einer perspektivischen Darstellung,
- Figur 3B: das in Figur 3A gezeigte zweite Ausführungsbeispiel des Planetenträgers anhand einer Vorderansicht,
- Figuren 4A bis 4C: ein drittes Ausführungsbeispiel eines erfindungsgemäßen Planetenträgers anhand von verschiedenen Darstellungen,
- Figur 4D: den in den Figuren 4A bis 4C dargestellten Planetenträger mit einem an ihm gelagerten Planetenrad anhand einer ausschnittsweisen Darstellung,
- Figur 4E: eine prinzipielle Darstellung eines Planetenrads, welches an einem Ausführungsbeispiel des erfindungsgemäßen Planetenträgers gelagert werden kann, und
- Figur 5: eine prinzipielle Darstellung eines Planetengetriebes.

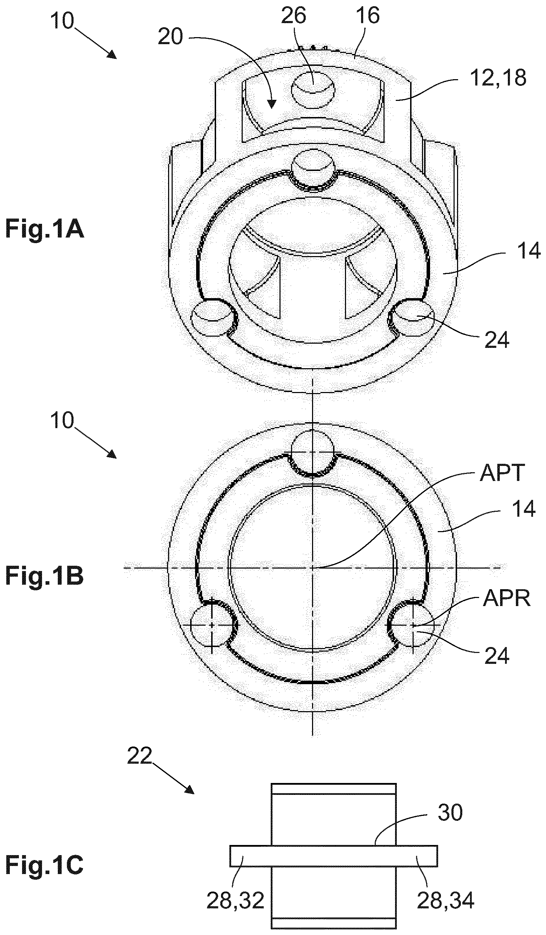

In den Figuren 1A und 1B ist ein Planetenträger 10 nach dem Stand der Technik anhand einer perspektivischen Darstellung bzw. anhand einer Vorderansicht dargestellt. Der Planetenträger 10 weist einen Trägerkörper 12 auf, an welchem ein erster Trägerabschnitt 14 und ein zweiter Trägerabschnitt 16 bezogen auf eine Planetenträger-Drehachse APT beabstandet zueinander befestigt sind. Im Betrieb ist der Planetenträger 10 um die Planetenträger-Drehachse APT drehbar. Sowohl der erste Trägerabschnitt 14 als auch der zweite Trägerabschnitt 16 sind in etwa scheibenförmig ausgeführt und mit Stegen 18 verbunden. Zwischen dem ersten Trägerabschnitt 14 und dem zweiten Trägerabschnitt 16 sowie zwischen den Stegen 18 bildet der Planetenträger 10 insgesamt drei Aufnahmehohlräume 20, in welche jeweils ein Planetenrad 22 (siehe Figur 1C) eingebracht werden kann.

Der erste Trägerabschnitt 14 weist drei erste Lagerungsbohrungen 24 und der zweite Trägerabschnitt 16 drei zweite Lagerungsbohrungen 26 auf, welche zur Lagerung jeweils eines Planetenrads 22 dienen. Dabei sind die ersten Lagerungsbohrungen 24 entlang der Planetenträger-Drehachse APT jeweils fluchtend zu den zweiten Lagerungsbohrungen 26 ausgerichtet.

Wie erwähnt, ist in Figur 1C ein Planetenrad 22 gezeigt, welches am in den Figuren 1A und 1B gezeigten Planetenträger 10 gelagert werden kann. Das Planetenrad 22 umfasst eine Planetenradachse 28, welche als ein Stift, beispielsweise aus Metall, ausgeführt sein kann, der durch eine entsprechende Durchgangsbohrung 30 des Planetenrads 22 durchgesteckt werden kann. Wie aus der Figur 1C ersichtlich, steht die Planetenradachse 28 beidseitig in axialer Richtung über das Planetenrad 22 über. Die überstehenden Abschnitte bilden einen ersten Lagerungsabschnitt 32 und einen zweiten Lagerungsabschnitt 34.

Wie aus den Figuren 1A und 1B zu erkennen ist, sind die Lagerungsbohrungen 24, 26 vollständig geschlossen. Um das in Figur 1C gezeigte Planetenrad 22 am Planetenträger 10 lagern zu können, muss das Planetenrad 22 ohne die Planetenradachse 28 so in den Aufnahmehohlraum 20 eingebracht werden, dass die Durchgangsbohrung 30 des Planetenrads 22 mit einer der ersten Lagerungsbohrungen 24 des ersten Trägerabschnitts 14 und einer der zweiten Lagerungsbohrungen 26 des zweiten Trägerabschnitts 16 fluchtet. Anschließend wird die Planetenradachse 28 zunächst durch die erste Lagerungsbohrung 24, anschließend durch die Durchgangsbohrung 30 des Planetenrads 22 und schlussendlich durch die zweite Lagerungsbohrung 26 durchgeführt. Im montierten Zustand greifen der erste Lagerungsabschnitt 32 in die erste Lagerungsbohrung 24 und der zweite Lagerungsabschnitt 34 in die zweite Lagerungsbohrung 26 ein. Ferner ist das montierte Planetenrad 22 um eine Planetenrad-Drehachse APR drehbar im Planetenträger 10 gelagert, die parallel zur Planetenträger-Drehachse APT verläuft.

Hieraus wird ersichtlich, dass die Montage, die zur Lagerung des Planetenrad 22 am Planetenträger 10 notwendig ist, vergleichsweise aufwendig ist.

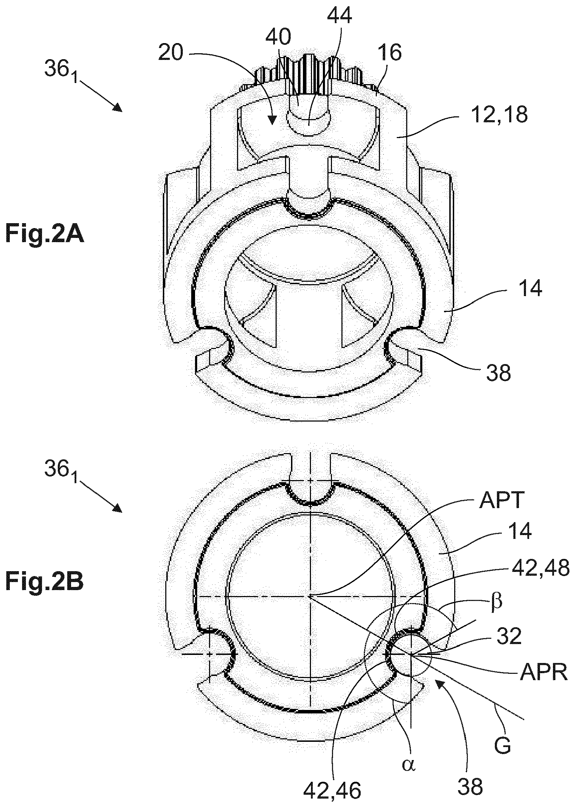

In den Figuren 2A und 2B ist ein erstes Ausführungsbeispiel eines nicht erfindungsgemäßen Planetenträgers 36₁ anhand einer perspektivischen Darstellung bzw. anhand einer Vorderansicht gezeigt. Der grundsätzliche Aufbau des Planetenträgers 36₁ gemäß dem ersten Ausführungsbeispiel entspricht demjenigen des Planetenträgers 10, der in den Figuren 1A und 1B dargestellt und beschrieben worden ist. Es wird daher nur auf die wesentlichen Unterschiede eingegangen. Im Gegensatz zu dem aus dem Stand der Technik bekannten Planetenträger 10 gemäß den Figuren 1A und 1B weist der Planetenträger 36₁ gemäß dem ersten Ausführungsbeispiel keine Lagerungsbohrungen 24, 26, sondern Lagerungsausnehmungen 38, 40 auf. Konkret umfasst der erste Trägerabschnitt 14 drei erste Lagerungsausnehmungen 38 und der zweite Trägerabschnitt 16 drei zweite Lagerungsausnehmungen 40, welche entlang der Planetenrad-Drehachse APR fluchtend angeordnet sind. Wie erwähnt, sind die Lagerungsbohrungen 24, 26 entlang des Umfangs vollständig geschlossen, während die erste Lagerungsausnehmung 38 und die zweite Lagerungsausnehmung 40 radial nach außen geöffnet sind.

Wie insbesondere aus der Figur 2B hervorgeht, bildet die erste Lagerungsausnehmung 38 eine erste Kontaktfläche 42, mit welcher im montierten Zustand die erste Lagerungsausnehmung 38 mit dem ersten Lagerungsabschnitt 32 des Planetenrads 22 in Kontakt tritt. Entsprechend bildet die zweite Lagerungsausnehmung 40 eine zweite Kontaktfläche 44, mit welcher die zweite Lagerungsausnehmung 40 mit dem zweiten Lagerungsabschnitt 34 des Planetenrads 22 im montierten Zustand in Kontakt tritt.

In Figur 2B ist ebenfalls erkennbar, dass im montierten Zustand das Planetenrad 22 um die Planetenrad-Drehachse APR drehbar im Planetenträger 36₁ und insbesondere in der ersten Lagerungsausnehmung 38 gelagert ist. Im ersten Ausführungsbeispiel des Planetenträgers 36₁ verläuft die Planetenrad-Drehachse APR parallel zur Planetenträger-Drehachse APT. Weiterhin ist in der Figur 2B eine Verbindungsgerade G dargestellt, welche durch die Planetenträger-Drehachse APT und die Planetenrad-Drehachse APR verläuft. Die Verbindungsgerade G teilt die erste Kontaktfläche 42 in einen ersten Kontaktflächenabschnitt 46 und einen zweiten Kontaktflächenabschnitt 48 auf.

Aufgrund der Tatsache, dass die erste Lagerungsausnehmung 38 radial nach außen geöffnet ist, umschließen der erste Kontaktflächenabschnitt 46 und der zweite Kontaktflächenabschnitt 48 den ersten Lagerungsabschnitt 32 nicht vollständig, sondern nur mit einem ersten Winkel α bzw. mit einem zweiten Winkel β, welche der erste Kontaktflächenabschnitt 46 bzw. der zweite Kontaktflächenabschnitt 48 mit der Verbindungsgeraden G einschließen. Gemäß dem ersten Ausführungsbeispiel des Planetenträgers 36₁ sind der erste Winkel α und der zweite Winkel β zum einen gleich groß und zum anderen größer als 90° und kleiner als 180°. Aufgrund der Tatsache, dass der erste Winkel α und der zweite Winkel β jeweils größer als 90° sind, wird eine Hinterschneidung erzeugt, welche den ersten Lagerungsabschnitt 32 radial nach außen fixiert. Ein Auswandern des ersten Lagerungsabschnitts 32 im Betrieb des Planetenträgers 36₁ wird hiermit verhindert.

Im ersten Ausführungsbeispiel des Planetenträgers 36₁ ist die zweite Lagerungsausnehmung 40 genauso aufgebaut wie die erste Lagerungsausnehmung 38 und weist daher dieselben Eigenschaften auf.

Weiterhin ist der Planetenträger 36₁ einteilig ausgestaltet und aus einem spritzgussfähigen Kunststoff gefertigt.

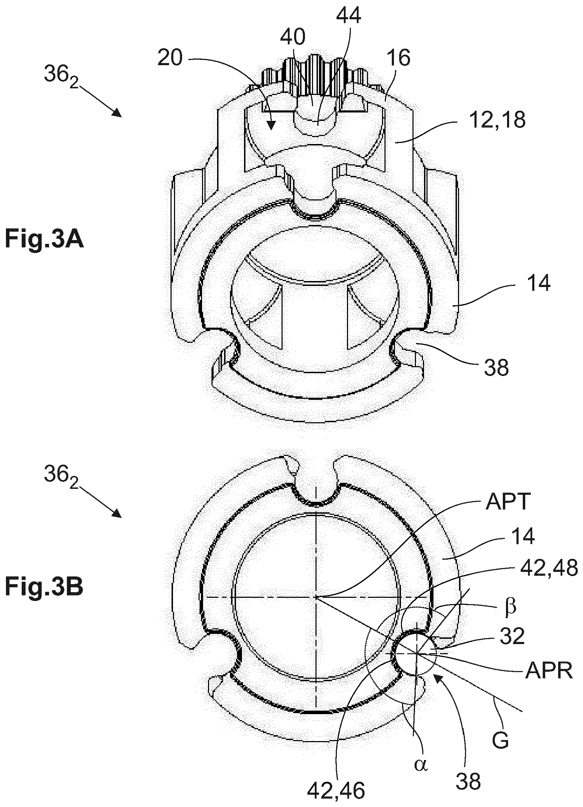

In den Figuren 3A und 3B ist ein zweites Ausführungsbeispiel eines erfindungsgemäßen Planetenträgers 36₂ anhand einer perspektivischen Darstellung bzw. anhand einer Vorderansicht gezeigt. Der wesentliche Aufbau des Planetenträgers 36₂ nach dem zweiten Ausführungsbeispiel entspricht dabei demjenigen Aufbau des Planetenträgers 36₁ nach dem ersten Ausführungsbeispiel. Allerdings sind die erste Lagerungsausnehmung 38 und die zweite Lagerungsausnehmung 40 anders aufgebaut.

In Figur 3B ist die erste Lagerungsausnehmung 38 gemäß dem zweiten Ausführungsbeispiel des erfindungsgemäßen Planetenträgers 36₂ gut erkennbar. Im Gegensatz zum ersten Ausführungsbeispiel des erfindungsgemäßen Planetenträgers 36₁ ist der erste Winkel α nicht gleich dem zweiten Winkel β, sondern sie unterscheiden sich. Wie aus der Figur 3B ersichtlich, ist der erste Winkel α größer als der zweite Winkel β. Sowohl der erste Winkel α als auch der zweite Winkel β sind größer als 90° und kleiner als 180°.

Wie insbesondere aus der Figur 3A hervorgeht, verlaufen dabei der erste Winkel α und der zweite Winkel β in der ersten Lagerungsausnehmung 38 bezogen auf die Planetenrad-Drehachse APR gegensinnig zum ersten Winkel α und zum zweiten Winkel β der zweiten Lagerungsausnehmung 40. Mit anderen Worten sind die ersten Lagerungsausnehmungen 38 bezogen auf die in den Figuren 3A und 3B gewählte Darstellung nach links geöffnet, während die zweiten Lagerungsausnehmungen 40 nach rechts geöffnet sind.

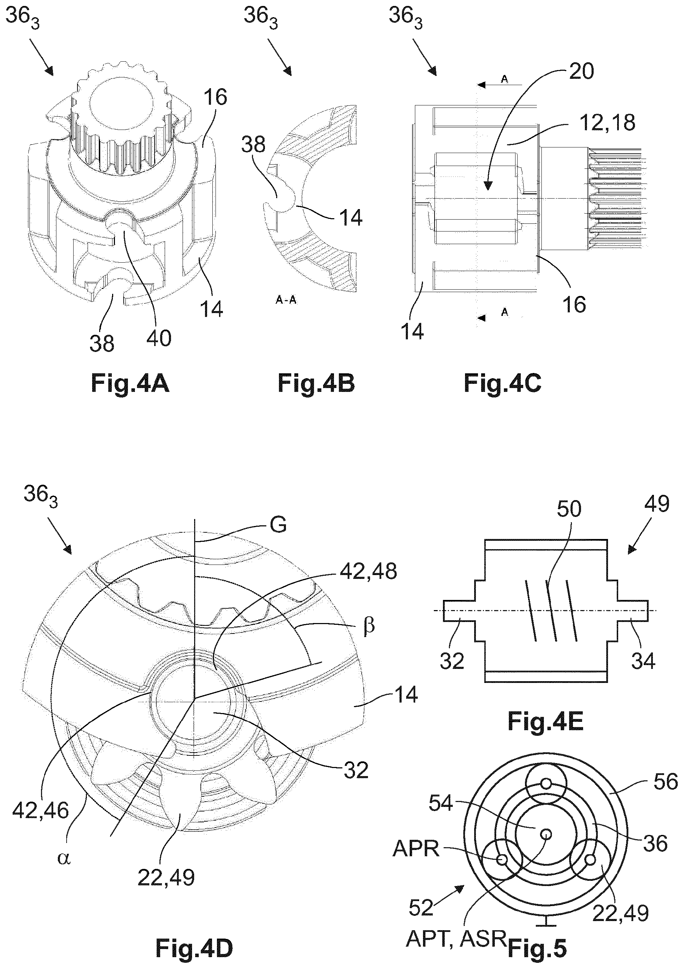

In den Figuren 4A bis Figur 4C ist ein drittes Ausführungsbeispiel des erfindungsgemäßen Planetenträgers 36₃ anhand von verschiedenen Darstellungen gezeigt. Der Planetenträger 36₃ nach dem dritten Ausführungsbeispiel entspricht dabei weitgehend dem Planetenträger 36₂ nach dem zweiten Ausführungsbeispiel. Wie jedoch aus der Figur 4D hervorgeht, welche einen vergrößerten Ausschnitt des in den Figuren 4A bis 4C gezeigten Planetenträgers 36₃ zeigt, ist der zweite Winkel β kleiner als 90°, während der erste Winkel α deutlich über 90°, jedoch weniger als 180° beträgt.

In der Figur 4E ist ein Planetenrad 49 gezeigt, welches mit den gezeigten Ausführungsbeispielen des Planetenträgers 36 verwendet werden kann. Im Gegensatz zum in der Figur 1C gezeigten Planetenrad 22 sind der erste Lagerungsabschnitt 32 und der zweite Lagerungsabschnitt 34 integral mit dem Planetenrad 49 ausgebildet. Folglich ist das Planetenrad 49 einteilig ausgeführt, so dass eine separate Planetenradachse 28 nicht vorgesehen werden muss. Gleichwohl kann das in der Figur 1C dargestellte Planetenrad 22 ebenfalls mit allen dargestellten Ausführungsformen des erfindungsgemäßen Planetenträgers 36₂ - 36₃ verwendet werden. Anzumerken ist, dass das in der Figur 4E dargestellte Planetenrad 49 eine schrägverzahnte Planetenrad-Verzahnung 50 aufweist.

Zur Montage des Planetenträgers 36 wird beispielsweise das in der Figur 4E dargestellte Planetenrad 49 mittels einer zur Planetenträger-Drehachse APT hin gerichteten Bewegung in die erste Lagerungsausnehmung 38 und in die zweite Lagerungsausnehmung 40 eingebracht. Zur Montage des Planetenträgers 36₂, 36₃ gemäß dem zweiten und dem dritten Ausführungsbeispiel muss das Planetenrad 22 dabei noch etwas um die Verbindungsgerade G gedreht werden, so dass eine wendelförmige oder schraubenförmigen Bewegung durchgeführt werden muss. In beiden Fällen jedoch ist die Montage im Vergleich zu der Montage des in den Figuren 1A und 1B dargestellten Planetenträgers 10 nach dem Stand der Technik deutlich einfacher, insbesondere deshalb, weil die fluchtende Ausrichtung des Planetenrads 22 in Bezug auf die erste Lagerungsbohrung 24 und die zweite Lagerungsbohrung 26 entfallen kann.

In Figur 5 ist ein Planetengetriebe 52 anhand einer prinzipiellen Darstellung gezeigt, bei welchem insgesamt drei Planetenräder 49 mittels eines Planetenträgers 36 nach einem der zuvor beschriebenen Ausführungsbeispiele gelagert sind. Neben den Planetenrädern 49 sind ein zentrales Sonnenrad 54 sowie ein Hohlrad 56 zu erkennen. Die Planetenräder 49 stehen in kämmendem Eingriff sowohl mit dem Sonnenrad 54 als auch mit dem Hohlrad 56.

Das Hohlrad 56 ist dabei nicht drehbar, während sich das Sonnenrad 54 um eine Sonnenrad-Drehachse ASR drehen kann, die mit der Planetenträger-Drehachse APT zusammenfällt. Die Planetenräder 49 sind um jeweils eine Planetenrad-Drehachse APR drehbar im Planententräger 36 gelagert. Die Planetenrad-Drehachsen APR verlaufen dabei parallel zu der Planetenträger-Drehachse APT.

Das Planetengetriebe 52 ist dabei vollständig aus einem spritzgussfähigen Kunststoff gefertigt.

Nicht dargestellt ist ein Ausführungsbeispiel, bei dem die Planetenrad-Drehachsen APR windschief zur Planetenträger-Drehachse APT verlaufen. In diesem Ausführungsbeispiel ist das Planetengetriebe 52 als ein Schraubrad-Planetengetriebe ausgebildet.

### Bezugszeichenliste

- 10: Planetenträger nach dem Stand der Technik
- 12: Trägerkörper
- 14: erster Trägerabschnitt
- 16: zweiter Trägerabschnitt
- 18: Steg

- 20: Aufnahmehohlraum
- 22: Planetenrad
- 24: erste Lagerungsbohrung
- 26: zweite Lagerungsbohrung
- 28: Planetenradachse

- 30: Durchgangsbohrung
- 32: erster Lagerungsabschnitt
- 34: zweiter Lagerungsabschnitt
- 36: Planetenträger
- 36₁ - 36₃: Planetenträger
- 38: erste Lagerungsausnehmung

- 40: zweite Lagerungsausnehmung
- 42: erste Kontaktfläche
- 44: zweite Kontaktfläche
- 46: erster Kontaktflächenabschnitt
- 48: zweiter Kontaktflächenabschnitt
- 49: Planetenrad

- 50: schrägverzahnte Planetenrad-Verzahnung
- 49: Planetenrad
- 52: Planetengetriebe
- 54: Sonnenrad
- 56: Hohlrad
- APT: Planetenträger-Drehachse
- APR: Planetenrad-Drehachse
- G: Verbindungsgerade
- α: erster Winkel
- β: zweiter Winkel

## Patentansprüche

1. Planetenträger (36) eines Planetengetriebes (52), umfassend
- einen Trägerkörper (12), der sich entlang einer Planetenträger-Drehachse (APT) erstreckt,
- einen mit dem Trägerkörper (12) verbundenen ersten Trägerabschnitt (14), und
- einen mit dem Trägerkörper (12) verbundenen zweiten Trägerabschnitt (16), wobei
- der erste Trägerabschnitt (14) und der zweite Trägerabschnitt (16) entlang der Planetenträger-Drehachse (APT) beabstandet zueinander angeordnet sind und zumindest einen Aufnahmehohlraum (20) bilden, in welchen mindestens ein Planetenrad (22, 49) einbringbar ist,
- das zumindest eine Planetenrad (22, 49) einen ersten Lagerungsabschnitt (32) und einen zweiten Lagerungsabschnitt (34) aufweist, mit welchen das Planetenrad (22, 49) um eine Planetenrad-Drehachse (APR) drehbar im Planetenträger (36) lagerbar ist,
- der erste Trägerabschnitt (14) je Planetenrad (22, 49) eine erste Lagerungsausnehmung (38) und der zweite Trägerabschnitt (16) je Planetenrad (22, 49) eine zweite Lagerungsausnehmung (40) aufweist, und
- die erste Lagerungsausnehmung (40) eine erste Kontaktfläche (42) bildet, mit welcher dieselbe mit dem ersten Lagerungsabschnitt (32) in Kontakt tritt, wenn das Planetenrad (22, 49) im Aufnahmehohlraum (20) angeordnet ist,
- die zweite Lagerungsausnehmung (38) eine zweite Kontaktfläche (44) bildet, mit dem dieselbe mit dem zweiten Lagerungsabschnitt (34) in Kontakt tritt, wenn das Planetenrad (22, 49) im Aufnahmehohlraum (20) angeordnet ist,
- die erste Kontaktfläche (42) und/oder die zweite Kontaktfläche (44) von einer durch die Planetenträger-Drehachse (APT) und die Planetenrad-Drehachse (APR) verlaufende Verbindungsgeraden (G) in einen ersten Kontaktflächenabschnitt (46) und einen zweiten Kontaktflächenabschnitt (48) unterteilt werden,
- der erste Kontaktflächenabschnitt (46) einen ersten Winkel (α) mit der Verbindungsgeraden (G) einschließt,
- der zweite Kontaktflächenabschnitt (48) einen zweiten Winkel (β) mit der Verbindungsgeraden (G) einschließt,
- der erste Winkel (α) und der zweite Winkel (β) in einer Ebene liegen, die senkrecht zur Planetenträger-Drehachse (APT) verläuft, **dadurch gekennzeichnet dass**
- der erste Winkel (α) und der zweite Winkel (β) ungleich sind und zumindest einer der Winkel (α, β) größer als 90° ist.

2. Planetenträger (36) nach Anspruch 1,
**dadurch gekennzeichnet, dass** der erste Winkel (α) und der zweite Winkel (β) der ersten Lagerungsausnehmung (38) in Bezug auf die Planetenträger-Drehachse (APT) gegensinnig zum ersten Winkel (α) und zum zweiten Winkel (β) der zweiten Lagerungsausnehmung (40) angeordnet sind.

3. Planetenträger (36) nach einem der vorherigen Ansprüche, **dadurch gekennzeichnet, dass** der Planetenträger (36) aus einem spritzgussfähigen Kunststoff besteht und spritzgegossen ist.

4. Planetenträger (36) nach einem der vorherigen Ansprüche, **dadurch gekennzeichnet, dass** der Planetenträger (36) einteilig ausgestaltet ist.

5. Planetengetriebe (52), umfassend
- einen Planetenträger (36) nach einem der vorherigen Ansprüche, und
- zumindest ein Planetenrad (22, 49), welches um eine Planetenrad-Drehachse (APR) drehbar am Planetenträger (36) gelagert ist.

6. Planetengetriebe (52) nach Anspruch 5,
**dadurch gekennzeichnet, dass** das Planetenrad (22, 49) eine schrägverzahnte Planetenrad-Verzahnung (50) aufweist.

7. Planetengetriebe (52) nach Anspruch 5,
**dadurch gekennzeichnet, dass** die Planetenrad-Drehachse (APR) windschief zur Planetenträger-Drehachse (APT) verläuft.

8. Planetengetriebe (52) nach einem der Ansprüche 5 bis 7, **dadurch gekennzeichnet, dass** der erste Lagerungsabschnitt (32) und der zweite Lagerungsabschnitt (34) integral mit dem Planetenrad (49) ausgebildet sind.

## Claims

1. A planet carrier (36) of a planetary gearbox (52), comprising
- a carrier body (12) extending along a planet carrier rotation axis (APT),
- a first carrier portion (14) connected to the carrier body (12), and
- a second carrier portion (16) connected to the carrier body (12), wherein
- the first carrier portion (14) and the second carrier portion (16) are arranged at a distance from one another along the planet carrier rotation axis (APT) and form at least one receiving cavity (20) into which at least one planet gear (22, 49) can be introduced,
- the at least one planetary gear (22, 49) has a first bearing portion (32) and a second bearing portion (34), with which the planetary gear (22, 49) can be mounted in the planetary carrier (36) so as to be rotatable about a planetary gear rotation axis (APR),
- the first carrier portion (14) has a first bearing recess (38) for each planetary gear (22, 49) and the second carrier portion (16) has a second bearing recess (40) for each planetary gear (22, 49), and
- the first bearing recess (40) forms a first contact surface (42) with which it comes into contact with the first bearing portion (32) when the planetary gear (22, 49) is arranged in the receiving cavity (20),
- the second bearing recess (38) forms a second contact surface (44) with which it comes into contact with the second bearing portion (34) when the planetary gear (22, 49) is arranged in the receiving cavity (20),
- the first contact surface (42) and/or the second contact surface (44) are divided into a first contact surface portion (46) and a second contact surface portion (48) by a connecting straight line (G) passing through the planet carrier rotation axis (APT) and the planet gear rotation axis (APR),
- the first contact surface portion (46) encloses a first angle (α) with the connecting straight line (G),
- the second contact surface portion (48) encloses a second angle (β) with the connecting straight line (G),
- the first angle (α) and the second angle (β) lie in a plane perpendicular to the planet carrier axis of rotation (APT), **characterized in that**
- the first angle (α) and the second angle (β) are unequal and at least one of the angles (α, β) is greater than 90°.

2. The planet carrier (36) according to claim 1,
**characterized in that** the first angle (α) and the second angle (β) of the first bearing recess (38) are arranged in relation to the planet carrier axis of rotation (APT) in opposite directions to the first angle (α) and the second angle (β) of the second bearing recess (40).

3. The planet carrier (36) according to any one of the preceding claims,
**characterized in that** the planet carrier (36) consists of an injection-moldable plastic and is injection-molded.

4. The planet carrier (36) according to any one of the preceding claims,
**characterized in that** the planet carrier (36) is designed in one piece.

5. A planetary gearbox (52), comprising
- a planet carrier (36) according to any one of the preceding claims, and
- at least one planetary gear (22, 49) which is mounted on the planetary carrier (36) so as to be rotatable about a planetary gear rotation axis (APR).

6. The planetary gearbox (52) according to claim 5, **characterized in that** the planetary gear (22, 49) has a helical planetary gear toothing (50).

7. The planetary gearbox (52) according to claim 5, **characterized in that** the planet gear rotation axis (APR) is skewed relative to the planet carrier rotation axis (APT).

8. The planetary gearbox (52) according to any one of claims 5 to 7,
**characterized in that** the first bearing portion (32) and the second bearing portion (34) are formed integrally with the planetary gear (49).

## Revendications

1. Porte-satellite (36) d'un train (52) épicycloïdale, comprenant
- un corps (12) de porte-satellite, qui s'étend suivant un axe (APT) de rotation du porte-satellite,
- un premier segment (14) de porte-satellite relié au corps (12) du porte-satellite et
- un deuxième segment (16) de porte-satellite relié au corps (12) du porte-satellite, dans lequel
- le premier segment (14) du porte-satellite et le deuxième segment (16) du porte-satellite sont disposés à distance l'un de l'autre suivant l'axe (APT) de rotation du porte-satellite et forment au moins une cavité (20) de réception, dans laquelle au moins un satellite (22, 49) peut être introduit,
- le au moins un satellite (22, 49) a un premier segment (32) de montage et un deuxième segment (34) de montage, par lesquels le satellite (22, 49) peut être monté tournant autour d'un axe (APR) de rotation de satellite sur le porte-satellite (36),
- le premier segment (14) de porte-satellite a par satellite (22, 49) un premier évidement (38) de montage et le deuxième segment (16) de porte-satellite a par satellite (22, 49) un deuxième évidement (40) de montage, et
- le premier évidement (40) de montage forme une première surface (42) de contact, par laquelle celui-ci entre en contact avec le premier segment (32) de montage, lorsque que le satellite (22, 49) est disposé dans la cavité (20),
- le deuxième évidement (38) de montage forme une deuxième surface (44) de contact, par laquelle celui-ci entre en contact avec le deuxième segment (34) de montage, lorsque le satellite (22, 49) est disposé dans la cavité (20) de réception,
- la première surface (42) de contact et/ou la deuxième surface (44) de contact sont subdivisées par une droite (G) de liaison, passant par l'axe (APT) de rotation du porte-satellite et par l'axe (APR) du satellite, en un premier segment (46) de surface de contact et en un deuxième segment (48) de surface de contact,
- le premier segment (46) de surface de contact fait un premier angle (α) avec la droite (G) de liaison,
- le deuxième segment (48) de surface de contact fait un deuxième angle (β) avec la droite (G) de liaison,
- le premier angle (α) et le deuxième angle (β) sont dans un plan, qui s'étend perpendiculairement à l'axe (APT) de rotation du porte-satellite,
**caractérisé en ce que**
- le premier angle (α) et le deuxième angle (β) sont inégaux et l'un au moins des angles (α, β) est plus grand que 90°.

2. Porte-satellite (36) suivant la revendication 1, **caractérisé en ce que** le premier angle (α) et le deuxième angle (β) de la première cavité (38) de montage sont par rapport à l'axe (APT) de rotation du porte-satellite de sens contraire au premier angle (α) et au deuxième angle (β) du deuxième évidement (40) de montage.

3. Porte-satellite (36) suivant l'une des revendications précédentes,
**caractérisé en ce que** le porte-satellite (36) est en une matière plastique apte à être moulée par injection ou est moulée par injection.

4. Porte-satellite (36) suivant l'une des revendications précédentes,
**caractérisé en ce que** le porte-satellite (36) est d'une seule pièce.

5. Train (52) épicycloïdal, comprenant
- un porte-satellite (36) suivant l'une des revendications précédentes, et
- au moins un satellite (22, 49), qui est monté tournant autour d'un axe (APR) de rotation de satellite sur le porte-satellite (36).

6. Train (52) épicycloïdal suivant la revendication 5, **caractérisé en ce que** le satellite (22, 49) a une denture (50) de satellite à dents inclinées.

7. Train (52) épicycloïdal suivant la revendication 5, **caractérisé en ce que** l'axe (APR) de rotation de satellite s'étend non parallèlement à l'axe (APT) de rotation du porte-satellite.

8. Train (52) épicycloïdal suivant l'une des revendications 5 à 7,
**caractérisé en ce que** le premier segment (32) de montage et le deuxième segment (34) de montage sont constitués d'un seul tenant avec le satellite (49).
